# EUROPEAN PATENT APPLICATION

(11) **EP 3 503 432 A1**
(43) Date of publication of application: **26.06.2019**
(21) Application number: 17209794.1
(22) Date of filing: 21.12.2017
(51) Int. Cl.: H04B 10/114, H04B 10/40

(54) **DEVICE FOR REMOTE DATA TRANSFER USING A LASER TECHNIQUE**

(71) Applicant: Vestel Elektronik Sanayi ve Ticaret A.S., 45030 Manisa (TR)
(72) Inventor: DÖNER, Cagdas, 45030 Manisa (TR)
(74) Representative: Ascherl, Andreas

(57) **Abstract**

The present invention refers to a device for remote data transferring between a transmitting end and a receiving end using a laser technique according to the present invention. The device preferably comprises of a modulator, a data converter, a demodulator, a cylindrical drum (1) rotating in a predefined axis by a transmitting end motor, a laser source, and a laser sensor provided at the cylindrical drum (1). The data at the transmitting end is converted to a digital data by the data converter and transferred to a stepper motor thus the laser head (4) capable to move across the length of fixed part (3) based on the received digital data. The laser head (4) is configured to move and project laser beam over the cylindrical drum (1) based on the received digital data. The laser sensor is configured to detect the laser beam in a sequence over the cylindrical drum (1) as a sinusoidal pattern. The modulator is configured to modulate the sinusoidal pattern modulated (10) and to transmit the modulated laser signal to the receiving end. At the receiving end, the device is capable to convert the modulated laser signal to the data.

## Description

This invention refers to a device for remote data transferring between a transmitting end and a receiving end using a laser technique according to claim 1. More specifically, the invention provides a device for remote data transferring between a transmitting end and a receiving end using a cylindrical drum and the laser technique.

### Background of the Invention

Remote data transmission (RDT) was a term used in the 1980s, primarily in Germany, for the transmission of data between computers over a medium using a communications protocol. At the time, the most widespread form was RDT over the telephone network. Other transmission media like radio waves or light were also used. But in most of the cases RDT now utilizes an Internet communication. However, in the lack of Internet access, it is burdensome process to establish a communication between devices for transferring of data at remote location.

Conventionally, the methods utilized for transferring data between two nodes or devices requires a medium to carry over the data. Typically, this medium is a network infrastructure for current devices like Mobile Phones, loT devices (Internet of Things devices) and similar devices. But for those devices, there may not be initial network connectivity on the given environments. There is an unmet need to define a way to transfer the configuration data to that kind of electronic devices.

The subject-matter of the prior art does not provide an option to transfer data remotely between nodes without the need for Internet connectivity. Further, the techniques available in the prior art requires complicated network configurations and is expensive.

### Object of the Invention

It is therefore the object of the present invention to provide a device for remote data transferring between a transmitting end and a receiving end using a laser technique in an efficient manner.

### Description of the Invention

The before mentioned object is solved by a device for remote data transferring between a transmitting end and a receiving end using a laser technique according to claim 1.

The device according to the present invention preferably comprises of at least one modulator, at least one data converter, and at least one demodulator. The device further comprises of at least one cylindrical drum rotating in a predefined axis by a transmitting end motor, at least one laser source, and a plurality of laser sensors provided at the cylindrical drum. The laser source includes but is not limited to a laser head and a fixed part. The laser head is connected to a stepper motor to enable to move the laser head across the length of fixed part. The data at the transmitting end is converted to a digital data by the data converter and transferred to the stepper motor thus the laser head capable to move across the length of fixed part based on the received digital data. The laser head is further configured to move and project laser beam over the cylindrical drum based on the received digital data. The laser sensor is configured to detect the laser beam in a sequence over the cylindrical drum as a sinusoidal pattern. The modulator is configured to modulate the sinusoidal pattern and to transmit the modulated laser signal to the receiving end.

This solution is beneficial since such a device for remote data transferring between devices or nodes without the need for Internet connectivity is provided.

Further preferred embodiments are subject-matter of dependent claims and/or of the following specification parts.

According to a preferred embodiment of the present invention the laser head is configured to move in a horizontal axis over the cylindrical drum. The stepper motor is provided to generate discrete movement for the laser head at various speeds based on the digital data. The modulation of the sinusoidal pattern is performed using known methods for example Amplitude Shifting Key (ASK) or Frequency Shifting Key (FSK). The laser sensors are located vertically and horizontally as a matrix inside the cylindrical drum so as to cover entire circumference of the cylindrical drum thereby to detect the laser beam from the laser head. The laser head is moved horizontally in a predetermined speed based on the digital data and the cylindrical drum is rotated in the predefined axis at a predetermined speed by the transmitting end motor.

According to another preferred embodiment of the present invention the device further comprises of a demodulator for demodulating the modulated laser signal into the sinusoidal pattern and transmitting it to the cylindrical drum at the receiving end. The cylindrical drum is provided with the laser sensor capable to receive and convert the sinusoidal pattern into the digital data at the receiving end. The data converter is capable to convert the digital data into data at the receiving end that is originally sent from the transmitting end. The laser sensor may include but not limited to photodiodes.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates an exemplary model of a cylindrical drum with laser sensors when the device provided at a transmitting end, according to the present invention;
- Fig. 2: illustrates an exemplary four bit data converted to analog sinusoidal pattern at the transmitting end, according to the present invention; and
- Fig. 3: illustrates an exemplary model of a cylindrical drum with laser sensors when the device provided at a receiving end, according to the present invention.

### Detailed Description of the Drawings

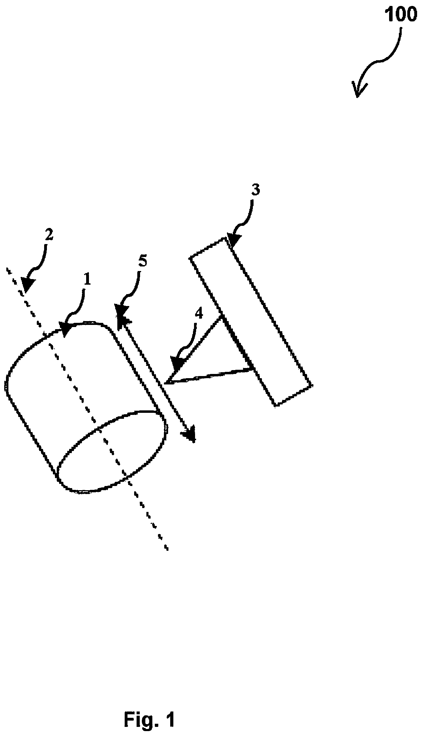

Fig. 1 illustrates an exemplary model 100 of a cylindrical drum 1 with laser sensors when the device provided at a transmitting end, according to the present invention. The device for remote data transferring between a transmitting end and a receiving end using a laser technique according to the present invention preferably comprises of at least one modulator, at least one data converter, and at least one demodulator. The device further comprises of at least one cylindrical drum 1 rotating in a predefined axis by a transmitting end motor, at least one laser source, and a plurality of laser sensors provided at the cylindrical drum 1. The transmitting end motor is provided to rotate the cylindrical drum 1 in the predefined axis 2 during the remote data transferring process.

The laser source includes but not limited to a laser head 4 and a fixed part 3. The laser head 4 is connected to a stepper motor to enable to move the laser head 4 across the length of fixed part. The data at the transmitting end is converted to a digital data by the data converter and transferred to the stepper motor thus the laser head 4 capable to move across the length of fixed part based on the received digital data. The data to be transferred is converted to ASCII codes character by character. That is for a letter 'A' the converted code is '01000001'. So this digital data need to be converted to analogue for transferring that data to the receiver end. That is to the cylinder with laser sensors at the receiver end. This analogue conversion is performed by the laser head 4 with a horizontal 5 movement over the rotating cylindrical drum 1.

The laser head 4 is configured to move and project laser beam over the cylindrical drum 1 based on the received digital data. The laser sensor is configured to detect the laser beam in a sequence over the cylindrical drum 1 as a sinusoidal pattern. The modulator is configured to modulate the sinusoidal pattern and to transmit the modulated laser signal to the receiving end. This solution is beneficial since such a device for remote data transferring between devices or nodes without the need for Internet connectivity.

According to a preferred embodiment of the present invention the laser head 4 is configured to move in a horizontal 5 axis over the cylindrical drum 1. The stepper motor is provided to generate discrete movement for the laser head 4 at various speeds based on the digital data. The modulation of the sinusoidal pattern can be performed using known methods for example Amplitude Shifting Key (ASK) or Frequency Shifting Key (FSK). The laser sensors are located vertically and horizontally 5 as a matrix inside the cylindrical drum 1 so as to cover entire circumference of the cylindrical drum 1 thereby to detect the laser beam from the laser head 4. The laser head 4 is moved horizontally 5 in a predetermined speed based on the digital data and the cylindrical drum 1 rotated in the predefined axis 2 at a predetermined speed by the transmitting end motor.

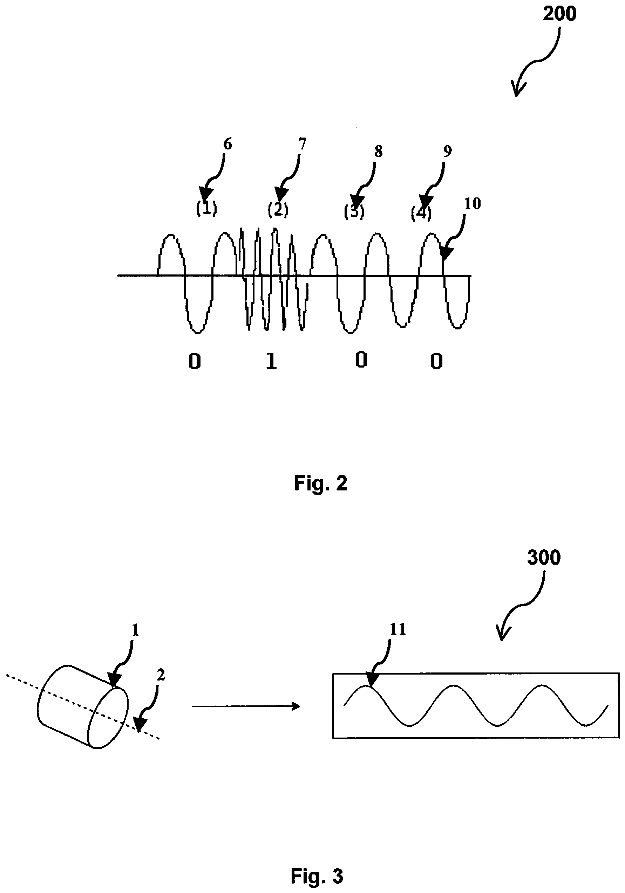

That is to send "01000001" bit-stream sequentially, the laser head 4 starts to move when the cylindrical drum 1 rotting in the predetermined axis, and the projection of the laser beam on the cylinder can create sinusoidal patterns which are modulated using FSK or ASK. So, to send first nibble (4 bit), if FSK is being used the sinusoidal pattern generated by the laser head 4 pointed onto the cylindrical drum 1 is shown in Fig.2.

Fig. 2 illustrates an exemplary four bit data converted to analog sinusoidal pattern at the transmitting end, according to the present invention. The first 6, third 8 and fourth 9 bits are generated with same speed from the laser head 4. But, the second bit 7, that is bit value "1" is generated by a higher speed movement of the laser head 4. So, higher speed (or higher period on laser head 4 move, because it is a harmonic motion as denoted in fig.1 in a horizontal 5 direction) can create more frequent patterns 10 which demonstrates bit one ("1").

Fig. 3 illustrates an exemplary model 300 of a cylindrical drum 1 with laser sensor when the device provided at a receiving end, according to the present invention. The device further comprises of a demodulator for demodulating the modulated laser signal into the sinusoidal pattern 11 and transmitting it to the cylindrical drum 1 at the receiving end. The cylindrical drum 1 is provided with the laser sensors capable to receive and convert the sinusoidal pattern 11 into the digital data at the receiving end. The data converter is capable to convert the digital data into data at the receiving end that is originally sent from the transmitting end. The laser sensor may include but not limited to photodiodes. The device for remote data transfer is provided in both the transmitting end and the receiving end. All the elements of the device are available at both the end. But the function of the device may vary based on the data transmission or reception. That is either the data to be transferred or received. The elements include but not limited to the laser head 4, the cylindrical drum 1, the laser sensors, the stepper motor, the data converter and the motor for rotating the cylindrical drum 1. The received laser signal at the receiving end can be tracked and read by the cylinder.

The transmitting end or receiving end may be a mobile device, computer, laptop, tablet or any data electronic device, therefore the mobile device may act as the transmitting end as well as the receiving end depending upon whether to send the data or to receive the data.

Thus, the device can achieve remote data transferring between a transmitting end and a receiving end using a laser technique according to the present invention. The device preferably comprises of at least one modulator, at least one data converter, and at least one demodulator. The device further comprises of at least one cylindrical drum 1 rotating in a predefined axis by a transmitting end motor, at least one laser source, and a plurality of laser sensors provided at the cylindrical drum 1. The laser source includes but not limited to a laser head 4 and a fixed part 3. The laser head 4 is connected to a stepper motor to enable to move the laser head 4 across the length of fixed part 3. The data at the transmitting end is converted to a digital data by the data converter and transferred to the stepper motor thus the laser head 4 capable to move across the length of fixed part 3 based on the received digital data. The laser head 4 is configured to move and project laser beam over the cylindrical drum 1 based on the received digital data. The laser sensor is configured to detect the laser beam in a sequence over the cylindrical drum 1 as a sinusoidal pattern. The modulator is configured to modulate the sinusoidal pattern and to transmit the modulated laser signal to the receiving end. At the receiving end, the device is capable to convert the modulated laser signal to the data.

### List of reference numbers

- 1: cylindrical drum
- 2: direction of rotation of cylindrical drum
- 3: fixed part
- 4: laser head
- 5: horizontal direction
- 6: first bit of the nibble
- 7: second bit of the nibble
- 8: third bit of the nibble
- 9: fourth bit of the nibble
- 10: modulated laser signal / modulated sinusoidal pattern
- 11: received sinusoidal signal

## Claims

1. A device for remote data transferring between a transmitting end and a receiving end using a laser technique, wherein the device comprises
at least one modulator, at least one data converter and at least one demodulator,
wherein the device further comprises of at least one cylindrical drum (1) rotating in a predefined axis by a transmitting end motor, at least one laser source and a plurality of laser sensor provided at the cylindrical drum (1),
wherein the laser source includes a laser head (4) and a fixed part (3), wherein the laser head (4) is connected to a stepper motor to enable to move the laser head (4) across the length of fixed part (3)
wherein the data at the transmitting end are converted to a digital data by the data converter and transferred to the stepper motor, thus the laser head (4) is capable to move across the length of fixed part (3) based on the received digital data,
wherein the laser head (4) is configured to move and project laser beam over the cylindrical drum (1) based on the received digital data,
wherein the laser sensor is configured to detect the laser beam in a sequence over the cylindrical drum (1) as a sinusoidal pattern and
wherein the modulator is configured to modulate the sinusoidal pattern and to transmit the modulated laser signal to the receiving end.

2. The device as claimed in claim 1, wherein the laser head (4) is configured to move in a horizontal (5) axis over the cylindrical drum (1), and wherein the stepper motor is provided to generate discrete movement for the laser head (4) at various speeds based on the digital data.

3. The device as claimed in claim 1, wherein the modulation of the sinusoidal pattern is using Amplitude Shifting Key (ASK) or Frequency Shifting Key (FSK).

4. The device as claimed in claim 1, wherein the laser sensors are located vertically and horizontally (5) as a matrix inside the cylindrical drum (1) so as to cover the entire circumference of the cylindrical drum (1), thereby to detect the laser beam from the laser head (4).

5. The device as claimed in claim 1, wherein the laser head (4) moves horizontally (5) in a predetermined speed based on the digital data and the cylindrical drum (1) is rotated in the predefined axis (2) at a predetermined speed by the transmitting end motor.

6. The device as claimed in claim 1, wherein the device further comprises a demodulator for demodulating the modulated laser signal into the sinusoidal pattern (11) and for transmitting it to the cylindrical drum (1) at the receiving end.

7. The device as claimed in claim 6, wherein the cylindrical drum (1) provided with the laser sensor receives and converts the sinusoidal pattern (11) into the digital data at the receiving end.

8. The device as claimed in claim 7, wherein the data converter converts the digital data into data at the receiving end that is originally sent from the transmitting end.

9. The device as claimed in claim 1, wherein the laser sensor includes photodiodes.
